# EUROPEAN PATENT SPECIFICATION

(11) **EP 2 271 048 B1**
(45) Date of publication and mention of the grant of the patent: **06.11.2019**
(21) Application number: 09290520.7
(22) Date of filing: 30.06.2009
(51) Int. Cl.: H04L 29/06

(54) **Method for provisioning a multimedia service**
Verfahren zur Bereitstellung eines Multimedia-Dienstes
Procédé de fourniture d'un service multimédia

(43) Date of publication of application: 05.01.2011
(73) Proprietor: Alcatel Lucent, 91620 Nozay (FR)
(72) Inventor: Mampaye, Marcel, 1090 Bruxelles (BE)
(74) Representative: Nokia EPO representatives

(56) References cited:
- GB-A- 2 370 456
- US-A1- 2009 019 474

## Description

The present invention relates to a method for provisioning a multimedia service to a multimedia rendering device as described in the preamble of claim 1, the related system as described in the preamble of claim 5, and the related application server as in the claim 6 and communication device as in claim 8.

Currently, there are well known Internet Protocol Television systems, further referred to as IPTV systems, where such IPTV systems typically include a multimedia service rendering device at the user premises and IPTV application servers. Such a rendering device typically consists of a set-top box and a coupled television or screen. The set-top box is adapted to couple the user equipment like the television or screen over a communications network usually including an access network like ADSL coupling the user set-top box via a core network, like the internet, to the IPTV application server. An IPTV application server is able to provision IPTV services like IPTV program or Video on demand to the set-top box of the user for presentation at the connected television or screen.

For the interaction of the user in the context of IPTV services like per TV and Set Top Box STB pair, there is only one visual interface being the TV screen, and only one interaction device, being the (infrared) remote control. The Television Set Top box relation with the remote may be interactive but it is limited to one single user at the same time and it is not personalized to that user and cannot be personalized per user, or for all users in the household, and cannot be used by several users simultaneously.

An objective of the present invention is to provide a method for provisioning a multimedia service of the above known type but wherein a personalized service can be provisioned to any of the users of the multimedia system.

According to the invention, this object is achieved by the method described in claim 1 and the system as described in claim 5, the related application server as in the claim 6 and communication device as in claim 8.

Indeed, by first determining at least one additional multimedia service that is associated with a multimedia service that currently is provisioned to the rendering device by the multimedia application server and subsequently provisioning an option to choose an additional multimedia service of the at least one additional multimedia service, to a communications device that is associated with the multimedia service provisioned to the rendering device or provisioning an option to choose an additional multimedia service of the at least one additional multimedia service that is associated with a multimedia service that currently is provisioned to the rendering device, there is for each communications device that is associated with a multimedia service that currently is provisioned to the rendering device or the rendering device the possibility to first check on available additional multimedia services that are associated to the currently provisioned multimedia service, i.e. the Television broadcast or video on demand currently "playing" and subsequently to select an additional multimedia service of the at least one multimedia services for provisioning. In this manner any user has the option to control the multimedia application server and be able to select an additional multimedia service to be provisioned from a list of at least one additional multimedia service where the additional multimedia services are related to the currently provisioned multimedia service.

Such an additional multimedia service may be any kind of meta-information associated with the currently provisioned multimedia service like background information, advertisements related to the currently provisioned multimedia service, voting, obtaining additional media information, downloads such as pictures, video clips, additional information on the program, e-commerce related to items visible on screen, music and DVD sales, multi-player interactive TV gaming, etc. All these additional information, functions, features, actions and activities furthermore can be provisioned interactively and personalised according to the user's preferences which can be configured manually and/or by tracking previous requests and demands from the user.

Such a communications device associated to the multimedia service provisioned to the rendering device may be a mobile communications device belonging to any further spectators of the multimedia service that currently is provisioned to the rendering device or even a personal computer coupled to the internet via any communications network like IP communications network such as DSL or Cable. On each such associated communications device, additional multimedia services associated to the multimedia service that currently is provisioned to the rendering device can be obtained and provisioned to the user of the device.

Such an associated communication device is a device that is associated to a certain multimedia service-subscription and hence associated to one or more set-top boxes of a user by registering at the application server to be associated in the multimedia service-subscription
The determining of the at least one additional multimedia service associated with said multimedia service provisioned by said multimedia application server can be done by means of the configuration and subscription features of the multimedia service provisioned to the rendering device.

Another characteristic feature of the present invention is described in claim 2.

The actual provisioning of the additional multimedia service from the at least one additional multimedia service selected by the (mobile) communications device that is associated with the multimedia service provisioned to the rendering device can be done to the (mobile) communications device that selected the additional multimedia service or alternatively to another device like e.g. the rendering device.

A further characteristic feature of the present invention is described in claim 3.

The step of determining the additional multimedia service is based on a request of a (mobile) communications device associated with the multimedia service provisioned to the rendering device RD, hence as an initiative of the user of the communications device.

A further characteristic feature of the present invention is described in claim 4.

The provisioning of the additional multimedia service is the provisioning of the service over the first communications network coupling the rendering device RD to the multimedia application server IPTV-AS including the home network at the user premises, a coupled access network and a coupled core network like the internet.

The provisioning of the additional multimedia service can be provisioned over a second communications network CN2 coupling the (mobile) communications device CD, CD1, CD2 to the application server IPTV-AS like communications network such as wireless or mobile communications network e.g. GSM, 2.5G GPRS, 3G, 4G, LTE or WiMax compatible networks or possibly other Communications networks like cable networks.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
FIG. 1 represents a multimedia system with devices and coupling networks wherein the implementation of the present invention is realized.
FIG. 2 represents the functional structure of a multimedia application server according to the present invention.

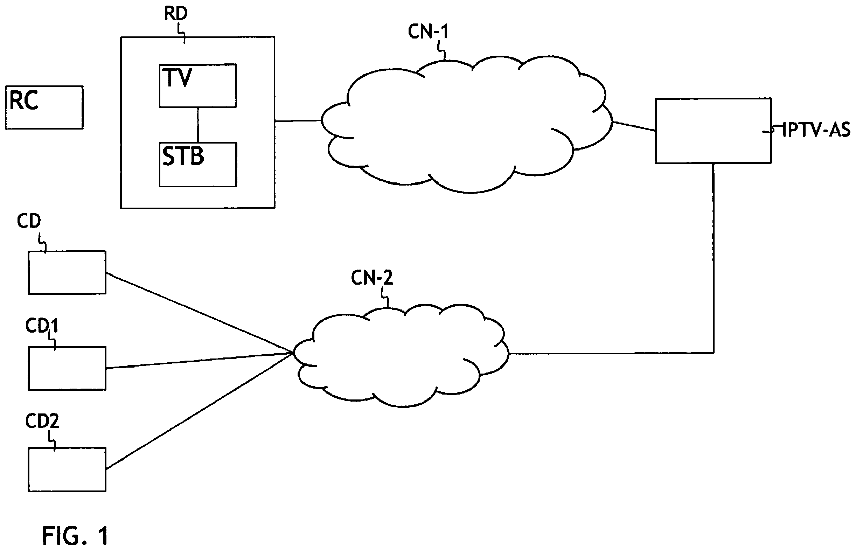

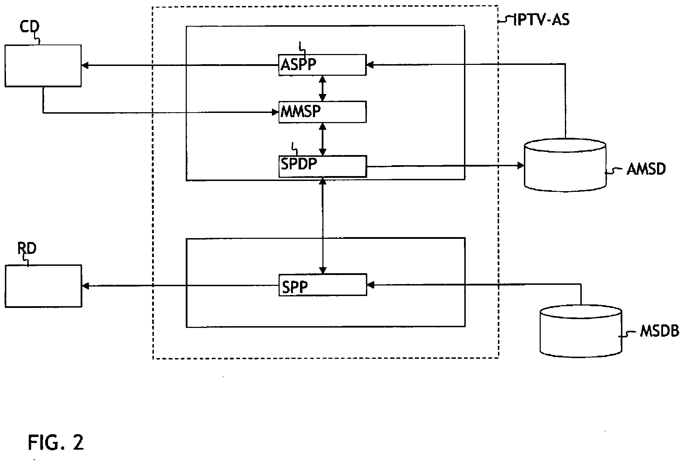

In the following paragraphs, referring to the drawings, an implementation of the method for provisioning a multimedia service and the related devices according to the present invention will be described. In the first paragraph of this description the main elements of this network with its functional parts as presented in respective figures, FIG. 1 and FIG. 2 are described. In the second paragraph, all connections between the before mentioned network elements and described functional parts are defined. In the succeeding paragraph the actual execution of system for provisioning multimedia services to a multimedia rendering device RD is described..

An essential element of this embodiment of the present invention, as presented in FIG.1, is a multimedia application server IPTV-AS for provisioning multimedia services to a multimedia Rendering Device RD. Such a multimedia service rendering device usually located at the user premises typically consists of a set-top box and a coupled television or screen. Such a set-top box is adapted to couple user equipment like the television or screen over a communications network usually including an access network like ADSL coupling the user set-top box to the IPTV application server.

Alternatively the multimedia service may be provisioned to the rendering device via a core network like the internet in a manner commonly known as 'over the top' and the rendering device may be adapted to render multimedia services that are provisioned 'over the top'.

A multimedia application server IPTV-AS is able to provision multimedia services like IPTV program or Video on demand to the set-top box of the user for presentation at the connected television or screen.

Furthermore there is dedicated remote control RC belonging to the rendering device RD adapted to control TV and/or the Set-top box.

In addition the system of the present invention includes one or more communication devices CD, CD1, CD2 which are associated via user-subscription to a multimedia service provisioned to the rendering device RD and are adapted to request an additional multimedia service that is associated to a multimedia service provisioned to a rendering device RD.

The remote control device is coupled to the rendering device over an air-interface like infrared. Furthermore the rendering device RD is coupled to the multimedia application server over a communications network CN-1 being a core network, like an IP network or the internet. Each of the (mobile) communications devices CD, CD1, CD2 shown in FIG.1 further is coupled to the multimedia application server over a second communications network CN-2 like a wireless or mobile communications network such as GSM, 2.5G GPRS, 3G, 4G, LTE or WiMax compatible networks. Other communications devices, like personal computers or smart handheld devices are coupled over an IP connection via a fixed access network like DSL with or without an intermediate private, shared or public wireless Wi-Fi network.

The first user, being the multimedia service subscriber, master of the house, person who holds the multimedia service subscription e.g. being an IPTV service subscription first may use a password protected configuration feature of the multimedia service that is provisioned to the rendering device and define the users allowed to connect to this multimedia service via their mobile handset or smart handheld device or any handheld device with mobile or wireless function or other communications device coupled to the multimedia application server IPTV-AS over a communications network.

The solution, however, will probably work well with mobile interface because its security will be strong and readily available (no preliminary deployment of new security function is needed) but any other communications interface having similar security characteristics will be equally suitable.

The multimedia application server IPTV-AS as shown in FIG.2 includes a service provisioning part SPP that is able to provision at least one multimedia service to the rendering device RD. The provisioned multimedia service may be obtained from a multimedia service database MSDB.

The multimedia application server IPTV-AS further comprises an additional multimedia service determination part SPDP that is adapted to determine an additional multimedia service that is associated with a multimedia service provisioned to the rendering device RD and a multimedia service selecting part MMSP that is adapted to select an additional multimedia service of the at least one additional multimedia service by a mobile communications device associated with the multimedia service provisioned to the rendering device RD. The additional multimedia service may be provisioned to a mobile communications device CD or a fixed communications device CD1 like a personal computer.

Furthermore the multimedia application server IPTV-AS further comprises an additional multimedia service provisioning part ASPP that is adapted to provision an additional multimedia service of the at least one available additional multimedia service to a mobile communications device associated with the multimedia service provisioned to the rendering device and requesting the service.

The provisioned additional multimedia service may be obtained from an additional multimedia service database AMSD.

The rendering device RD has an input/output terminal that is coupled with an input/output terminal of the multimedia application server IPTV-AS. The input/output terminal of the multimedia application server IPTV-AS is at the same time an input/output terminal of the service provisioning part SPP that is coupled to the multimedia service database MSDB. The service provisioning part SPP further is coupled to the additional multimedia service determination part SPDP. The additional multimedia service determination part SPDP further is coupled to the additional multimedia database AMSD.

The communications devices CD, CD1, CD2 are coupled with an input/output terminal to an input/output terminal of the multimedia application server IPTV-AS input/output terminal of the multimedia application server IPTV-AS.
The selecting part MMSP is coupled to an input/output terminal of the multimedia application server IPTV-AS. The selecting part MMSP further is coupled to the additional multimedia service determination part SPDP and coupled to the additional multimedia service provisioning part ASPP. Both he additional multimedia service provisioning part ASPP as the selecting part MMSP are coupled via an input/output terminal of the multimedia application server IPTV-AS to an input/output terminal of the communications devices CD, CD1, CD2.

In order to explain the actual operation of the present invention it is assumed that a first user-terminal, being the rendering device RD is connected to the multimedia service application server IPTV-AS that currently is provisioning a certain multimedia service to the rendering device RD. The currently provisioned multimedia service for instance is a TV program like a TV show or a movie or a video clip, or a video on demand being a certain movie. It is further assumed that there is at least further user-terminal, the mobile communications device CD, being a mobile phone that is coupled over the GSM network to the multimedia application server IPTV-AS for controlling the multimedia application server IPTV-AS. The mobile communications device CD belongs to a second user also watching the same multimedia service i.e. a provisioned Video on demand service being a certain movie at the same rendering device RD.

Although for the sake of simplicity the proceedings are only described for a second user that is associated with the mobile communications device CD. Further users corresponding to other (mobile) communications devices CD1, CD2 may be present as shown in FIG.1.

Further it is assumed that the second user watching the currently provisioned Video On demand is looking for present additional multimedia services, where such additional multimedia services are related with the provisioned multimedia service (Video On Demand) like adds related to the video on demand, background information, voting service, obtaining additional media information, downloads such as pictures, video clips, additional information on the program, e-commerce related to items visible on screen, music and DVD or Blu-Ray sales, multi-player interactive TV gaming, etc.

The additional multimedia service determination part SPDP on the fly or upon request determines one or more additional multimedia services that relate to the multimedia service which is provisioned at the same time, i.e. advertisements, the background information. Furthermore such an additional multimedia service may be meta-information on the currently provisioned multimedia service like a voting service, obtaining additional media information, downloads such as pictures, video clips, additional information on the program, e-commerce related to items visible on screen, music and DVD or Blu-Ray sales, multi-player interactive TV gaming, etc. All these additional information, functions, features, actions and activities furthermore can be personalised according to the user's preferences which can be configured manually and/or by tracking previous requests and demands from the user.

Upon request a list of available additional multimedia services may be forwarded to the mobile communications device CD or may generally be accessible to the mobile communications device CD. Subsequently the second user by means of the mobile communications device sends a selection signal indicating the chosen additional multimedia service.

The selecting part MMSP subsequently at reception of the indication of the selected additional multimedia service from the list of one or more additional multimedia services request directly the additional multimedia database AMSD for provisioning the chosen additional multimedia service, i.e. the background info on the Video On Demand or via the additional multimedia service provisioning part ASPP that subsequently provisions the chosen additional multimedia service from the at least one additional multimedia service to the mobile communications device CD of the second user, which device is associated by means of user subscription with the multimedia service provisioned to the rendering device RD. This mobile communications device being the requesting device at receipt of the provisioning of the chosen additional multimedia service displays the additional multimedia service on the screen of the mobile communications device CD and plays associated sound via speakers of device or via connected earphones.

The additional multimedia service here being the background information on the Video on demand asset.

Hence by applying the present invention the control of additional multimedia services is given to further users that are associated to a certain multimedia service provisioned at a certain rendering device and in addition an additional multimedia service can be provisioned to any associate further user and be provisioned to a mobile communications device of the further user.

The additional multimedia service from the at least one additional multimedia service that is associated with the multimedia service provisioned to the rendering device can include the on-demand, programmed or automated provisioning of one or more media content element that may be associated to one another or that may be part of a media bundle or package and that may be associated to the media content that is associated with the multimedia service provisioned to the rendering device, such as screen savers for PC, ringtones for mobile handsets, screen backgrounds for PC or mobile handsets, which can all be related with a single subject like a popular artist or a popular movie and which can be provisioned to the (mobile) communications device CD, CD1, CD2, and which may relate to a popular movie or TV program being provisioned by the multimedia service provisioned to the rendering device.

The provisioning of the different elements of the multimedia bundle may be distributed to the communication devices based on the capabilities of each of the devices.

It is to be noted that the present invention may be applicable for both IPTV and cable TV solutions, on digital TV solutions, but also when the multimedia service is provisioned towards former analogue TV solutions. The advantage of this backward compatibility is that the applications enabled by the new platform may be immediately deployed to a large audience. Synchronisation with real time broadcast programs (analogue or digital) is easy as the timing of the information stream is well-known.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Method for provisioning a multimedia service to a multimedia rendering device (RD) by a multi media application server (IPTV-AS), said multimedia application server (IPTV-AS), being coupled to said rendering device (RD) over a communication network (CN-1), whereby said method further comprises the step of:
a. determining at least one additional multimedia service associated with said multimedia service provisioned by said multimedia application server (IPTV-AS), to said rendering device (RD); and
b. selecting an additional multimedia service of said at least one additional multimedia service by a communications device (CD, CD1, CD2) associated with said multimedia service provisioned to said rendering device (RD), said communications device (CD, CD1, CD2) being associated with said multimedia service by means of registration at said multimedia application server (IPTV-AS); and
c. provisioning, said additional multimedia service of said at least one additional multimedia service selected by said communications device associated with said multimedia service provisioned to said rendering device (RD), to said respective communications device.

2. Method according to claim 1 , **CHARACTERISED IN THAT** said step of determining said additional multimedia service is based on a request of a communications device associated with said multimedia service provisioned to said rendering device (RD).

3. Method according to claim 1, **CHARACTERISED IN THAT** said step of provisioning said additional multimedia service is provisioning said service over said communications network (CN1).

4. Method according to claim 1, **CHARACTERISED IN THAT** said step of provisioning said additional multimedia service is provisioning said service over a second communications network (CN2) coupling said communications device (CD, CD1, CD2) to said application server (IPTV-AS).

5. Multimedia system for provisioning multimedia services to a multimedia rendering device (RD), said multimedia system comprising a multi media application server (IPTV-AS) for provisioning said multimedia service to said multimedia Rendering device (RD), said multimedia application server (IPTV-AS) being coupled to said rendering device (RD) over a communication network (CN1), whereby said system further comprises:
a. an additional multimedia service determination part (SPDP), adapted to determine an additional multimedia service associated with said multimedia service; and
b. a selecting part (MMSP), adapted to select an additional multimedia service of said at least one additional multimedia service by a communications device associated with said multimedia service provisioned to said rendering device (RD), said communications device (CD, CD1, CD2) being associated with said multimedia service by means of registration at said multimedia application server (IPTV-AS); and
c. an additional multimedia service provisioning part (ASPP), adapted to provision said additional multimedia service of said at least one additional multimedia service to a communications device associated with said multimedia service provisioned to said rendering device (RD).

6. The application server (IPTV-AS), of the Multimedia system according to claim 5, **CHARACTERISED IN THAT** said Application server (IPTV-AS) further comprises:
a. an additional multimedia service determination part (SPDP), adapted to determine an additional multimedia service associated with said multimedia service; and
b. a selecting part (MMSP), adapted to select an additional multimedia service of said at least one additional multimedia service by a communications device associated with said multimedia service provisioned to said rendering device (RD), said communications device being associated with said multimedia service by means of registration at said multimedia application server (IPTV-AS); and
c. an additional multimedia service provisioning part (ASPP), adapted to provision said additional multimedia service of said at least one additional multimedia service to a communications device associated with said multimedia service provisioned to said rendering device.

7. Application server, according to claim 6, **CHARACTERISED IN THAT** said Application server further comprises a service provisioning part (SPP), adapted to provision said multimedia service to said rendering device (RD).

8. The communication device (CD, CD1, CD2) of the Multimedia system according to claim 5 **CHARACTERISED IN THAT** said communication device comprises:
a. a communicating part, adapted to request said application server to determine an additional multimedia service associated with said multimedia service provisioned to said rendering device (RD); and
b. a selecting part, adapted to select an additional multimedia service from said at least one additional multimedia service; and
c. a presenting part, adapted to present said additional multimedia service selected and wherein:
said communications device being associated with said multimedia service by means of registration at said multimedia application server (IPTV-AS).

## Patentansprüche

1. Verfahren zum Bereitstellen eines Multimediadienstes für eine Multimediawiedergabevorrichtung (RD) durch einen Multimedianwendungs-Server (IPTV-AS), wobei der Multimediaanwendungs-Server (IPTV-AS) an die Wiedergabevorrichtung (RD) über ein Kommunikationsnetz (CN-1) gekoppelt ist, wobei das Verfahren ferner den folgenden Schritt umfasst:
a. Bestimmen mindestens eines zusätzlichen Multimediadienstes, der dem Multimediadienst zugeordnet ist, der durch den Multimediaanwendungs-Server (IPTV-AS) für die Wiedergabevorrichtung (RD) bereitgestellt wird; und
b. Auswählen eines zusätzlichen Multimediadienstes des mindestens einen zusätzlichen Multimediadienstes durch eine Kommunikationsvorrichtung (CD, CD1, CD2), die dem Multimediadienst zugeordnet ist, der für die Wiedergabevorrichtung (RD) bereitgestellt wird, wobei die Kommunikationsvorrichtung (CD, CD1, CD2) dem Multimediadienst mittels einer Registrierung bei dem Multimediaanwendungs-Server (IPTV-AS) zugeordnet ist; und
c. Bereitstellen des zusätzlichen Multimediadienstes des mindestens einen zusätzlichen Multimediadienstes, der durch die Kommunikationsvorrichtung ausgewählt ist, die dem Multimediadienst zugeordnet ist, der für die Wiedergabevorrichtung (RD) bereitgestellt wird, für die jeweilige Kommunikationsvorrichtung.

2. Verfahren nach Anspruch 1, **dadurch gekennzeichnet, dass** der Schritt des Bestimmens des zusätzlichen Multimediadienstes auf einer Anforderung einer Kommunikationsvorrichtung, die dem Multimediadienst zugeordnet ist, der für die Wiedergabevorrichtung (RD) bereitgestellt wird, beruht.

3. Verfahren nach Anspruch 1, **dadurch gekennzeichnet, dass** der Schritt des Bereitstellens des zusätzlichen Multimediadienstes ist, den Dienst über das Kommunikationsnetz (CN1) bereitzustellen.

4. Verfahren nach Anspruch 1, **dadurch gekennzeichnet, dass** der Schritt des Bereitstellens des zusätzlichen Multimediadienstes ist, den Dienst über ein zweites Kommunikationsnetz (CN2), das die Kommunikationsvorrichtung (CD, CD1, CD2) an den Anwendungs-Server koppelt, bereitzustellen.

5. Multimediasystem zum Bereitstellen von Multimediadiensten für eine Multimediawiedergabevorrichtung (RD), wobei das Multimediasystem einen Multimedianwendungs-Server (IPTV-AS) zum Bereitstellen des Multimediadienstes für die Multimediawiedergabevorrichtung (RD) umfasst, wobei der Multimediaanwendungs-Server (IPTV-AS) an die Wiedergabevorrichtung (RD) über ein Kommunikationsnetz (CN-1) gekoppelt ist, wobei das System ferner Folgendes umfasst:
a. einen zusätzlichen Multimediadienstbestimmungsabschnitt (SPDP), der ausgelegt ist, einen zusätzlichen Multimediadienst zu bestimmen, der dem Multimediadienst zugeordnet ist; und
b. einen Auswahlabschnitt (MMSP), der ausgelegt ist, einen zusätzlichen Multimediadienst des mindestens einen zusätzlichen Multimediadienstes durch eine Kommunikationsvorrichtung, die dem Multimedia zugeordnet ist, der für die Wiedergabevorrichtung (RD) bereitgestellt wird, auszuwählen, wobei die Kommunikationsvorrichtung (CD, CD1, CD2) dem Multimediadienst mittels einer Registrierung bei dem Multimediaanwendungs-Server (IPTV-AS) zugeordnet ist; und
c. einen Abschnitt zum Bereitstellen eines zusätzlichen Multimediadienstes (ASPP), der ausgelegt ist, den zusätzlichen Multimediadienst des mindestens einen zusätzlichen Multimediadienstes für eine Wiedergabevorrichtung bereitzustellen, die dem Multimediadienst zugordnet ist, der für die Wiedergabevorrichtung (RD) bereitgestellt wird.

6. Anwendungs-Server (IPTV-AS) des Multimediasystems nach Anspruch 5, **dadurch gekennzeichnet, dass** der Anwendungs-Server (IPTV-AS) ferner Folgendes umfasst:
a. einen Abschnitt zum Bestimmen eines zusätzlichen Multimediadienstes (SPDP), der ausgelegt ist, einen zusätzlichen Multimediadienst zu bestimmen, der dem Multimediadienst zugeordnet ist; und
b. einen Auswahlabschnitt (MMSP), der ausgelegt ist, einen zusätzlichen Multimediadienst des mindestens einen zusätzlichen Multimediadienstes durch eine Kommunikationsvorrichtung, die dem Multimedia zugeordnet ist, der für die Wiedergabevorrichtung (RD) bereitgestellt wird, auszuwählen, wobei die Kommunikationsvorrichtung dem Multimediadienst mittels einer Registrierung bei dem Multimediaanwendungs-Server (IPTV-AS) zugeordnet ist; und
c. einen Abschnitt zum Bereitstellen eines zusätzlichen Multimediadienstes (ASPP), der ausgelegt ist, den zusätzlichen Multimediadienst des mindestens einen zusätzlichen Multimediadienstes für eine Kommunikationsvorrichtung bereitzustellen, die dem Multimediadienst zugordnet ist, der für die Wiedergabevorrichtung (RD) bereitgestellt wird.

7. Anwendungs-Server nach Anspruch 6, **dadurch gekennzeichnet, dass** der Anwendungs-Server ferner einen Abschnitt zum Bereitstellen eines Dienstes (SPP) umfasst, der ausgelegt ist, den Multimediadienst für die Wiedergabevorrichtung (RD) bereitzustellen.

8. Kommunikationsvorrichtung (CD, CD1, CD2) des Multimediasystems nach Anspruch 5, **dadurch gekennzeichnet, dass** die Kommunikationsvorrichtung Folgendes umfasst:
a. einen Kommunikationsabschnitt, der ausgelegt ist, anzufordern, dass der Anwendungs-Server einen zusätzlichen Multimediadienst bestimmt, der dem Multimediadienst zugeordnet ist, der für die Wiedergabevorrichtung (RD) bereitgestellt wird; und
b. einen Auswahlabschnitt, der ausgelegt ist, einen zusätzlichen Multimediadienst aus dem mindestens einen zusätzlichen Multimediadienst auszuwählen; und
c. einen Darstellungsabschnitt, der ausgelegt ist, den zusätzlichen Multimediadienst, der ausgewählt ist, darzustellen, und wobei:
die Kommunikationsvorrichtung dem Multimediadienst mittels einer Registrierung bei dem Multimediaanwendungs-Server (IPTV-AS) zugeordnet ist.

## Revendications

1. Procédé de fourniture d'un service multimédia à un dispositif de rendu multimédia (RD) par un serveur d'applications multimédia (IPTV-AS), ledit serveur d'applications multimédia (IPTV-AS) étant couplé audit dispositif de rendu (RD) sur un réseau de communication (CN-1), moyennant quoi ledit procédé comprend en outre les étapes de :
a. détermination d'au moins un service multimédia supplémentaire associé audit service multimédia fourni par ledit serveur d'applications multimédia (IPTV-AS), audit dispositif de rendu (RD) ; et
b. sélection d'un service multimédia supplémentaire dudit au moins un service multimédia supplémentaire par un dispositif de communication (CD, CD1, CD2) associé audit service multimédia fourni audit dispositif de rendu (RD), ledit dispositif de communication (CD, CD1, CD2) étant associé audit service multimédia par enregistrement au niveau dudit serveur d'applications multimédia (IPTV-AS) ; et
c. fourniture dudit service multimédia supplémentaire dudit au moins un service multimédia supplémentaire sélectionné par ledit dispositif de communication associé audit service multimédia fourni audit dispositif de rendu (RD), audit dispositif de communication respectif.

2. Procédé selon la revendication 1, **CARACTERISE EN CE QUE** ladite étape de détermination dudit service multimédia supplémentaire est basée sur une demande d'un dispositif de communication associé audit service multimédia fourni audit dispositif de rendu (RT).

3. Procédé selon la revendication 1, **CARACTERISE EN CE QUE** ladite étape de fourniture dudit service multimédia supplémentaire est la fourniture dudit service sur ledit réseau de communication (CN1).

4. Procédé selon la revendication 1, **CARACTERISE EN CE QUE** ladite étape de fourniture dudit service multimédia supplémentaire est la fourniture dudit service sur un second réseau de communication (CN2) couplant ledit dispositif de communication (CD, CD1, CD2) audit serveur d'applications (IPTV-AS).

5. Système multimédia destiné à la fourniture de services multimédia à un dispositif de rendu multimédia (RD), ledit système multimédia comportant un serveur d'applications multimédia (IPTV-AS) destiné à fournir ledit service multimédia audit dispositif de rendu multimédia (RD), ledit serveur d'applications multimédia (IPTV-AS) étant couplé audit dispositif de rendu (RD) sur un réseau de communication (CN-1), moyennant quoi ledit système comprend en outre :
a. une partie de détermination de service multimédia supplémentaire (SPDP) adaptée pour déterminer un service multimédia supplémentaire associé audit service multimédia ;
b. une partie de sélection (MMSP), adaptée pour sélectionner un service multimédia supplémentaire dudit au moins un service multimédia supplémentaire par un dispositif de communication associé audit service multimédia fourni audit dispositif de rendu (RD), ledit dispositif de communication (CD, CD1, CD2) étant associé audit service multimédia par enregistrement au niveau dudit serveur d'applications multimédia (IPTV-AS) ; et
c. une partie de fourniture de service multimédia supplémentaire (ASPP), adaptée pour fournir ledit service multimédia dudit au moins un service multimédia supplémentaire à un dispositif de communication associé audit service multimédia fourni audit dispositif de rendu (RD) .

6. Serveur d'applications (IPTV-AS), du système multimédia selon la revendication 5, **CARACTERISE EN CE QUE** ledit serveur d'applications (IPTV-AS) comprend en outre :
a. une partie de détermination de service multimédia supplémentaire (SPDP) adaptée pour déterminer un service multimédia supplémentaire associé audit service multimédia ; et
b. une partie de sélection (MMSP), adaptée pour sélectionner un service multimédia supplémentaire dudit au moins un service multimédia supplémentaire par un dispositif de communication associé audit service multimédia fourni audit dispositif de rendu (RD), ledit dispositif de communication étant associé audit service multimédia par enregistrement au niveau dudit serveur d'applications multimédia (IPTV-AS) ; et
c. une partie de fourniture de service multimédia supplémentaire (ASPP), adaptée pour fournir ledit service multimédia dudit au moins un service multimédia supplémentaire à un dispositif de communication associé audit service multimédia fourni audit dispositif de rendu.

7. Serveur d'applications selon la revendication 6, **CARACTERISE EN CE QUE** ledit serveur d'applications comprend en outre une partie de fourniture de service (SPP) adaptée pour fournir ledit service multimédia audit dispositif de rendu (RD).

8. Dispositif de communication (CD, CD1, CD2) du système multimédia selon la revendication 5, **CARACTERISE EN CE QUE** ledit dispositif de communication comprend :
a. une partie de communication, adapté pour demander audit serveur d'application de déterminer un service multimédia supplémentaire associé audit service multimédia fourni audit dispositif de rendu (RD) ; et
b. une partie de sélection, adaptée pour sélectionner un service multimédia supplémentaire parmi ledit au moins un service multimédia supplémentaire ; et
c. une partie de présentation, adaptée pour présenter ledit service multimédia supplémentaire sélectionné et dans lequel :
ledit dispositif de communication est associé audit service multimédia par enregistrement au niveau dudit serveur d'applications multimédia (IPTV-AS).
